# EUROPÄISCHE PATENTSCHRIFT

(11) **EP 2 536 599 B1**
(45) Veröffentlichungstag und Bekanntmachung des Hinweises auf die Patenterteilung: **02.11.2016**
(21) Anmeldenummer: 10798313.2
(22) Anmeldetag: 20.12.2010
(51) Int. Cl.: B60S 1/04, B60S 1/08

(54) **WISCHERMOTORSTEUERUNG**
WIPER MOTOR CONTROL
COMMANDE DE MOTEUR D'ESSUIE-GLACE

(30) Priorität: 15.02.2010 DE 102010001920
(43) Veröffentlichungstag der Anmeldung: 26.12.2012
(73) Patentinhaber: Robert Bosch GmbH, 70442 Stuttgart (DE)
(72) Erfinder: WEGNER, Norbert, 77815 Buehl (DE); ZIMMER, Joachim, Changsha, Hunan 410100 (CN)
(86) Internationale Anmeldenummer: PCT/EP2010/070190
(87) Internationale Veröffentlichungsnummer: WO 2011/098184

(56) Entgegenhaltungen:
- DE-A1- 10 009 797
- FR-A1- 2 785 246
- US-A- 4 866 357

## Beschreibung

### Stand der Technik

Wischeranlagen, wie sie beispielsweise an Kraftfahrzeugen eingesetzt werden, dienen dazu, eine Sichtscheibe von Feuchtigkeit und Verunreinigungen freizuhalten. Dafür wird üblicherweise ein Wischerblatt an einem Wischerarm über die Sichtscheibe geführt. Der Wischerarm wird oszillierend um einen Drehpunkt bewegt, so dass das Wischerblatt einen ungefähr kreissegmentförmigen Bereich der Sichtscheibe überstreicht.

Zur Steuerung eines Antriebsmotors für den Wischerarm sind unterschiedliche Herangehensweisen bekannt. In DE 10 2006 061 679 A1 wird vorgeschlagen, den Antriebsmotor derart zu steuern, dass eine Wischhäufigkeit abhängig von einer Lastgröße am Antriebsmotor ist. Auf diese Weise wird die Sichtscheibe seltener vom Wischblatt überstrichen, wenn sie annähernd trocken ist.

In DE 10 2005 048 343 A1 wird vorgeschlagen, den Antriebsmotor derart anzusteuern, dass ein unterer Bereich der Sichtscheibe schneller vom Wischerblatt überstrichen wird als ein oberer Bereich. Dadurch kann eine Wischerverfügbarkeit in einem Sichtbereich der Sichtscheibe erhöht werden.

In DE 100 24 255 A1 wird ausgeführt, dass Umkehrpositionen des Antriebsmotors derart in Abhängigkeit von einer Windgeschwindigkeit im Bereich des Wischerblatts gesteuert werden kann, dass der vom Wischerblatt überstrichene Bereich der Sichtscheibe konstant bleibt.

FR-A 2 785 246 zeigt eine gattungsgemässe Wischermotorsteuerung sowie ein gattungsgemässes Verfahren zur Steuerung eines Scheibenwischerantriebs an einem Kraftfahrzeug, wobei eine Geschwindigkeit eines Antriebsmotors in Wendelagen eines Wischerarms reduziert ist.

US-A 4,866,357 zeigt eine Scheibenwischeranlage mit einer Steuereinrichtung, die dazu eingerichtet ist, einen vorbestimmten Geschwindigkeitsverlauf eines Wischerblatts zu steuern.

Der Erfindung liegt die Aufgabe zugrunde, eine Wischermotorsteuerung anzugeben, die ein verbessertes Wischen bei niedriger Wischfrequenz erlaubt.

### Offenbarung der Erfindung

Die Erfindung löst das Problem durch eine Wischermotorsteuerung nach Anspruch 1, ein Verfahren nach Anspruch 8 und ein Computerprogrammprodukt nach Anspruch 9.

Zur Ansteuerung eines Wischermotors, der einen Wischerarm in einer Pendelbewegung zwischen zwei Wendeladen bewegt, ist eine Wischermotorsteuerung dazu ausgebildet, eine Geschwindigkeit des Wischerarms in Abhängig einer Stellung des Wischerarms zu steuern, wobei die Geschwindigkeit des Wischerarms in Wendebereichen, die die Wendelagen umfassen, unabhängig von der Geschwindigkeit des Wischerarms zwischen den Wendebereichen einem vorgegebenen Verlauf folgt.

Eine Absenkung der Geschwindigkeit des Wischerarms in einem Bereich zwischen den Wendelagen kann somit durchgeführt werden, ohne dass durch eine zu niedrige Geschwindigkeit des Wischerarms in den Wendebereich ein Rattern oder Klappern eines am Wischerarm befestigten Wischerblatts hervorgerufen wird. So kann im kontinuierlichen Wischbetrieb eine sehr niedrige Wischfrequenz erreicht werden, ohne eine Geräuschbelästigung, ein verschlechtertes Wischergebnis, einen vorzeitigen Verschleiß einer Oberfläche der Sichtscheibe, des Wischerblatts oder anderen Teilen des Wischersystems durch Rattern oder Klappern in Kauf nehmen zu müssen.

Der Verlauf der Geschwindigkeit in den Wendenbereichen folgt im Wesentlichen einer Sinusfunktion. Dieser Geschwindigkeitsverlauf kann die mechanische Beanspruchung eines oder aller Teile des Wischersystems gering halten.

Die Geschwindigkeit des Wischerarms zwischen den Wendebereichen ist geringer als das Maximum der Sinusfunktion. So können die Vorteile des sinusförmigen Geschwindigkeitsverlaufs in den Wendebereichen mit einer niedrigen Geschwindigkeit zwischen den Wendebereichen kombiniert sein.

Dabei ist die Geschwindigkeit des Wischerarms zwischen den Wendebereichen abhängig von einer mechanischen Last des Wischermotors.

Der Wischermotor kann mittels eines Kurbelgetriebes mit dem Wischerarm gekoppelt sein und die Wischermotorsteuerung kann dazu eingerichtet sein, die

Drehgeschwindigkeit des Wischermotors konstant zu halten, während sich der Wischerarm in einem der Wendebereiche befindet. Auf diese Weise kann eine übliche Wischermechanik verwendet werden, um auf einfache Weise einen sinusförmigen Geschwindigkeitsverlauf des Wischerarms zu unterstützen.

Die Wischermotorsteuerung kann dazu eingerichtet sein, die Drehgeschwindigkeit des Wischermotors zwischen den Wendebereich in einer niedrigeren Geschwindigkeit als in den Wendebereichen konstant zu halten. Dadurch ergibt sich im Bereich zwischen den Wendebereichen ein sinusförmiger Geschwindigkeitsverlauf mit einer verlängerten Periode der Sinusfunktion. Diese Art der Ansteuerung ist einfach und kostengünstig zu implementieren und kann dazu beitragen, die mechanische Belastung des Wischersystems zu minimieren.

Die Wischermotorsteuerung kann ferner eine Einrichtung zur Bestimmung, dass eine Leistungsaufnahme des Wischermotors über einem vorbestimmten Schwellenwert liegt, umfassen. Die Steuerung der Geschwindigkeit des Wischerarms kann demnach erst dann auf die beschriebene Weise durchgeführt werden, wenn beispielsweise aufgrund von hoher Reibung zwischen dem Wischerblatt und der Sichtscheibe die konkrete Gefahr eines Ratterns besteht.

Des weiteren kann die Wischermotorsteuerung eine Einrichtung umfassen, um zu bestimmen, dass eine Zeit, die verstreicht, bis der Wischerarm von einer Wendelage zur anderen Wendelage bewegt ist, über einem vorbestimmten Schwellenwert liegt. Vorteilhafterweise wird die spezifische Geschwindigkeitssteuerung in den Wendebereichen abhängig vom Ergebnis der Bestimmung der Einrichtung erst unterhalb einer vorbestimmten Wischerfrequenz durchgeführt, dir zur vorbestimmten Zeit korrespondiert.

Die Wischermotorsteuerung kann darüber hinaus eine Einrichtung zur Bestimmung, dass eine Windgeschwindigkeit im Bereich des Wischerarms oberhalb eines vorbestimmten Wertes liegt, umfassen. Vorteilhafterweise kann die beschriebene Wischermotorsteuerung so eine konkrete Ratterneigung anhand der Windgeschwindigkeit bestimmen und die beschriebene Geschwindigkeitssteuerung entsprechend durchführen.

Ferner umfasst ein Verfahren zum Steuern eines Wischermotors, der einen Wischerarm in einer Pendelbewegung zwischen zwei Wendelagen bewegt, Schritte des Bestimmens, dass sich der Wischerarm in einem von zwei Wendebereichen, die um die Wendelagen liegen, befindet und des Ansteuerns des Wischermotors derart, dass eine Geschwindigkeit des Wischerarms im Wendebereich unabhängig von einer Geschwindigkeit des Wischerarms zwischen den Wendebereichen einem fest vorgegebenen Verlauf folgt. Dabei ist die Geschwindigkeit des Wischerarms zwischen den Wendebereichen abhängig von einer mechanischen Last des Wischermotors.

Das Verfahren kann vorteilhafterweise in einer beispielsweise elektronischen Wischermotorsteuerung implementiert sein. So können die Vorteile der beschriebenen Technik auf kostengünstige Weise mit bestehenden Komponenten eines Wischersystems realisiert werden.

Ferner umfasst eine Computerprogrammprodukt Programmcodemittel zur Durchführung des beschriebenen Verfahrens, wenn das Computerprogrammprodukt auf einem computerlesbaren Datenträger gespeichert ist oder auf einer Verarbeitungseinrichtung abläuft.

### Kurze Beschreibung der Figuren

Die Erfindung wird nun mit Bezug auf die beigefügten Figuren näher beschrieben, in denen:

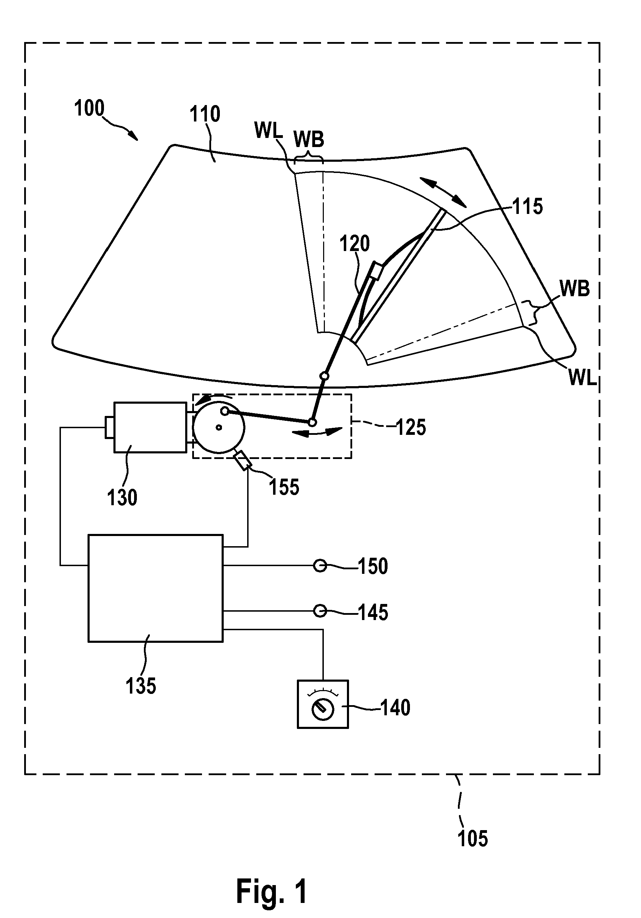

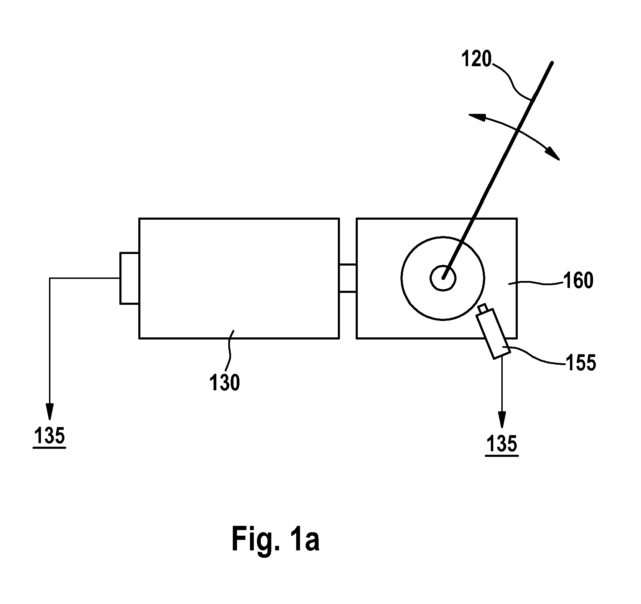

Fig. 1 ein Wischersystem für eine Sichtscheibe eines Kraftfahrzeugs;
Fig. 1 a eine Alternative zum Kurbelgetriebe aus Fig. 1;
Fig. 2 einen Verlauf einer Geschwindigkeit des Wischerarms aus Fig. 1;
Fig. 3 weitere Verläufe von Geschwindigkeiten des Wischerarms aus Fig. 1; und
Fig. 4 ein Diagramm einer lastabhängigen Wischermotorsteuerung des Wischersystems aus Fig. 1 darstellen.

Ferner ist die Wischermotorsteuerung 135 mit einem Regensensor 145 oder einer Schnittstelle zu einem Regensensor 145 verbunden. Signale, die die Wischermotorsteuerung 135 vom Regensensor 145 empfängt, können beispielsweise den Ablauf des Wischbetriebs, insbesondere in den Positionen 2 (Intervall) und 5 (Automatik) des Wahlschalters 140 beeinflussen. Alternativ oder zusätzlich können die vom Regensensor 145 empfangenen Signale einen Übergang zwischen den mittels den Wahlschalters 140 auswählbaren Betriebsmodi steuern.

Die Wischermotorsteuerung 135 ist auch mit einem Geschwindigkeitssensor 150 oder einer Schnittstelle zu einem Geschwindigkeitssensor 150 verbunden. Beispielsweise kann die Wischermotorsteuerung 135 mit einem Datenbus oder einer integrierten Steuerung eines Teils des Kraftfahrzeugs 105 verbunden sein, um ein Geschwindigkeitssignal des Kraftfahrzeugs 105 zu empfangen. Die mittels des Geschwindigkeitssensors 150 empfangen Signale werden von der Wischermotorsteuerung 135 dazu verwendet, den Wischbetrieb des Wischersystems 100 in Abhängigkeit einer mit der Geschwindigkeit des Kraftfahrzeugs 105 verbundenen Windgeschwindigkeit im Bereich des Wischerarms 120 zu steuern.

Schließlich ist die Wischermotorsteuerung 135 mit einem Stellungssensor 155 verbunden, der wenigstens eines von einer Stellung des Wischermotors 130, des Kurbelgetriebes 125 oder des Wischerarms 120 abtastet. Auf der Basis der mittels des Stellungssensors 155 empfangenen Signale steuert die Wischermotorsteuerung 135 den Wischermotors 130 in unterschiedlichen Positionen des Wischerarms 120 entsprechend an.

Figur 1 a zeigt ein kontinuierliches Getriebe in Form eines Untersetzungsgetriebes 160 als Alternative zum Kurbelgetriebe 125 in Figur 1; ebenfalls in Figur 1a dargestellt sind der Wischermotor 130, der Wischerarm 120 und der Stellungssensor 155. Das Untersetzungsgetriebe 160 betätigt den Wischerarm 120 direkt, wobei in einer Ausführungsform die Drehachse des Wischerarms 120 mit der Abtriebsachse des Untersetzungsgetriebes 160 zusammenfällt. Eine Winkelstellung des Wischermotors 130 ist direkt proportional zu einer Winkelstellung des Wischerarms 120. Eine solche Anordnung wird Direktantrieb oder "Direct Drive" genannt und ist für die Erfindung ohne Einschränkungen geeignet.

Die oszillierende Arbeitsweise des Wischerarms 120 von Figur 1 wird durch Steuerung der Drehrichtung des Wischermotors 130 erreicht. Eine Geschwindigkeitssteuerung des Wischermotors 130 sorgt für einen harmonischen Geschwindigkeitsverlauf des Wischerarms 130, wobei der Geschwindigkeitsverlauf dem im Wesentlichen sinusförmigen Geschwindigkeitsverlauf, der durch Einsatz des Kurbelgetriebes 125 in Figur 1 bewirkt wird, zumindest nahe kommt. Das Untersetzungsgetriebe 160 kann ein Stirnrad-, Planeten-, Schnecken- oder Riemengetriebe oder ein beliebiges anderes Getriebe umfassen, das einen drehwinkelunabhängigen Untersetzungsfaktor der Drehbewegung des Wischermotors 130 in die Drehbewegung des Wischerarms 120 bewirkt.

In anderen Ausführungsformen des Wischersystems 100 können der Regensensor 145, der Geschwindigkeitssensor 150 und/oder der Stellungssensor 155 auch entfallen. Darüber hinaus kann der Antriebsmotor 130 auch mittels eines Rotationsgetriebes, beispielsweise eines Stirnrad- oder Planetengetriebes auf den Wischerarm 120 wirken, wobei das Kurbelgetriebe 125 entfällt. Ein solches Wischersystem wird auch als Direktantrieb oder "Direct Drive" bezeichnet.

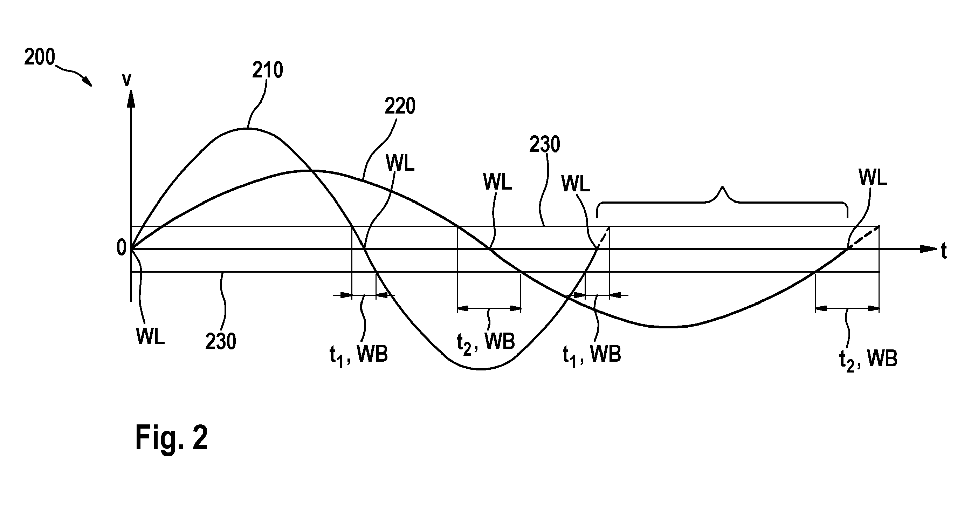

Fig. 2 zeigt einen Verlauf einer Geschwindigkeit des Wischerarms 120 des Wischersystems 100 aus Figur 1. In einer vertikalen Richtung ist eine Geschwindigkeit v qualitativ angetragen. In entsprechender Weise kann die Geschwindigkeit v eine Winkelgeschwindigkeit des Wischerarms 120 bezüglich der Sichtscheibe 110 aus Fig. 1 oder eines beliebigen Punktes des Wischerblatts 115 gegenüber der Sichtscheibe 110 aus Fig. 1 repräsentieren. In einer horizontalen Richtung ist eine Zeit t qualitativ angetragen. In den im Folgenden beschriebenen Zusammenhängen könnte anstelle der Zeit t auch eine Position des Wischerarms 120 als Bezugsgröße verwendet werden, da der Zusammenhang zwischen der Geschwindigkeit v und der Position des Wischerarms 120 von Bedeutung ist. Nachdem der Zusammenhang zwischen der Position des Wischerarms 120 und der Zeit t eindeutig definiert aber nicht notwendigerweise linear ist, wird zum leichteren Verständnis die Zeit t als Bezugsgröße verwendet.

Ein erster Verlauf 210 stellt einen Geschwindigkeitsverlauf des Wischerarms 120 im kontinuierlichen Normalbetrieb dar. Der Geschwindigkeitsverlauf 210 hat die Form einer Sinuswelle, von der lediglich eine komplette Periode dargestellt ist. In Wendelagen WL des Wischerarms 120 beträgt die Geschwindigkeit Null. Der erste Verlauf 210 stellt sich beispielsweise ein, wenn in Figur 1 der Wischermotor 130 mit konstanter Drehgeschwindigkeit läuft und das Kurbelgetriebe 120 aus dieser gleichförmigen Drehbewegung die oszillierende Bewegung des Wischerarms 120 bereitstellt. An den Stellen, an denen der erste Verlauf 210 die horizontale Achse schneidet, befindet sich der Wischerarm 120 in einer Wendeposition, d.h., in der obersten bzw. untersten erreichbaren Position auf der Sichtscheibe 110 aus Figur 1.

Ein zweiter Verlauf 220 stellt einen verlangsamten Betrieb des Wischersystems 100 aus Figur 1 dar. Entsprechend dem ersten Verlauf 210 hat der zweite Verlauf 220 die Form eines Sinuswelle, von der lediglich eine vollständige Periode dargestellt ist. Die Periode des zweiten Verlaufs 220 ist länger als die des ersten Verlaufs 210 und die Amplitude des zweiten Verlaufs 220 ist geringer als die des ersten Verlaufs 210.

Eine kritische Geschwindigkeit 230 ist als ein Paar horizontaler Geraden dargestellt. Liegt der Betrag der Geschwindigkeit v unterhalb des Betrags der kritischen Geschwindigkeit 230, also zwischen den Geraden, so neigt das Wischerblatt 115 dazu, zu rattern. Beim Rattern vollführt das Wischerblatt 115 eine ungleichförmige Bewegung über die Sichtscheibe 110, die das Wischergebnis negativ beeinflusst. Beim Rattern kann das Wischerblatt 115 in Schwingungsbewegungen versetzt werden, die um einen Befestigungspunkt des Wischerblatts 115 mit dem Wischerarm 120 verlaufen. Eine solche Ratterbewegung wird dadurch begünstigt, dass der Weg, den der unterste Punkt des Wischerblatts 115 auf der Sichtscheibe 110 überstreicht, viel kürzer als der Weg des vom obersten Punkt des Wischerblatts 115 überstrichen Bereichs der Sichtscheibe 110 ist. Die Ratterneigung ist zusätzlich abhängig von einem Reibungskoeffizienten des Wischerblatts 115 auf der Sichtscheibe 110. Der Reibungskoeffizient ist abhängig von einer Feuchtigkeit in einem Bereich zwischen dem Wischerblatt 115 und der Sichtscheibe 110 und von der Geschwindigkeit des Wischerblatts 115 gegenüber der Sichtscheibe 110. Mit abnehmender Geschwindigkeit des Wischerblatts 115 bezüglich der Sichtscheibe 110 steigt der Reibungskoeffizient exponential an.

Der erste Verlauf 210 durchläuft der Bereich der kritischen Geschwindigkeit 230 innerhalb von einer Zeit t1, die wesentlich kleiner als eine Zeit t2 des zweiten Verlaufs 220 ist. Im verlangsamten Betrieb des zweiten Verlaufs 220 ist die Wahrscheinlichkeit eines Ratterns des Wischerblatts 115 auf der Sichtscheibe 110 dementsprechend größer. Mit anderen Worten, je langsamer der Wischermotor 130 läuft, desto wahrscheinlicher ist ein Rattern des Wischerblatts 115 in Bereichen um die obere und die untere Wendelage WL. Ein Bereich, innerhalb dem einer der Geschwindigkeitsverläufe 210 oder 220 im Bereich der kritischen Geschwindigkeit 230 liegt, ist als Wendebereich WB eingetragen. Die Größe der Wendebereiche WB hängt von der Wahl der kritischen Geschwindigkeit 230 ab.

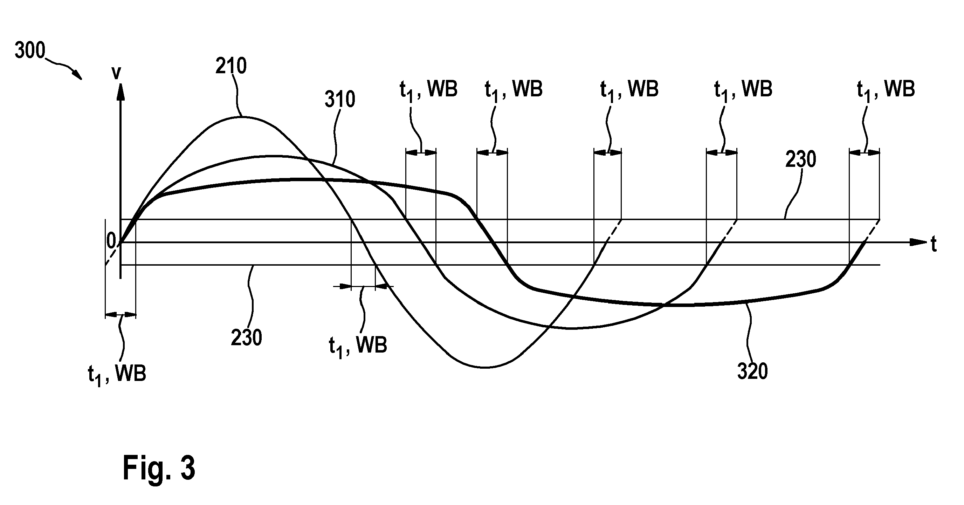

Figur 3 zeigt weitere Verläufe von Geschwindigkeiten des Wischerarms 120 bezüglich der Sichtscheibe 110 aus Figur 1. Die Darstellung des Diagramms 300 entspricht einschließlich des ersten Verlaufs 210 und der kritischen Geschwindigkeit 230 der Darstellung von Figur 2. Zusätzlich eingetragen sind ein dritter Verlauf 310 und ein vierter Verlauf 320.

In den drei dargestellten Verläufen 210, 310 und 320 ist die Zeit t1, während derer sich die Verläufe 210, 310, und 320 betragsmäßig unterhalb der kritischen Geschwindigkeit 230 befinden, identisch. Innerhalb der durch die Zeiten t1 bestimmten Wendebereiche WB entsprechen die Verläufe 210, 310 und 320 der Sinusfunktion des ersten Verlaufs 210. Außerhalb der Wendebereiche WB sind der dritte Verlauf 310 und der vierte Verlauf 320 gegenüber dem ersten Verlauf 210 unterschiedlich abgeflacht. Durch die Abflachung wird die Geschwindigkeit des Wischerarms 120 bzw. des Wischerblatts 115 bezüglich der Sichtscheibe 110 bis nahe an die Grenze der kritischen Geschwindigkeit 230 reduziert, wodurch noch kein Rattern des Wischerblatts 115 auf der Sichtscheibe 110 riskiert wird. Die Zykluszeit bzw. die Länge der Periode der Verläufe 310 und 320 wird dadurch verlängert, so dass eine Reinigung der Sichtscheibe 110 auch bei wenigen Wischperioden pro Zeiteinheit noch im kontinuierlichen Betrieb des Wischersystems 100 durchführbar ist. Eine solche Anforderung besteht beispielsweise bei Nebel oder sehr geringem Niederschlag.

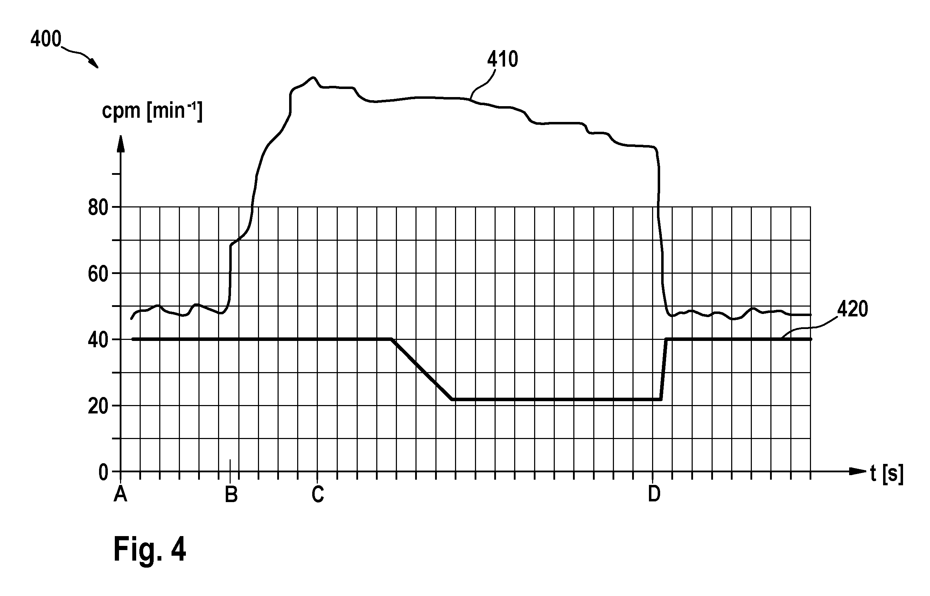

Figur 4 zeigt ein Diagramm 400 einer lastabhängigen Wischermotorsteuerung 135 des Wischersystems 100 aus Figur 1. In horizontaler Richtung ist eine Zeit t in Sekunden, in vertikaler Richtung eine Anzahl Wischzyklen pro Minute und eine Wischerlast (ohne Einheit) angetragen. Ein Wischzyklus entspricht dabei einer vollen Periode eines der Verläufe 210, 220, 310 bzw. 320.

Zwischen Zeitpunkten A und B ist die Sichtscheibe 110 nass. Zwischen dem Zeitpunkt B und einem Zeitpunkt C trocknet die Sichtscheibe 110 allmählich und bleibt dann bis zu einem Zeitpunkt D annähernd trocken. Zum Zeitpunkt D wird die Sichtscheibe 110 rasch wieder nass und bleibt bis zum Ende des dargestellten Verlaufs nass.

Ein qualitativer Verlauf 410 gibt eine durchschnittliche mechanische Last des Wischermotors 130 in Figur 1 an. Der Lastverlauf 410 kann beispielsweise auf der Basis einer Strommessung des Wischermotors 130 bei gleichbleibender Spannung bestimmt sein. Je trockener die Sichtscheibe 110 ist, desto höher ist die Last im Lastverlauf 410, so dass auf der Basis der Strommessung ein Nässegrad der Sichtscheibe 110 bestimmt werden und die Wischhäufigkeit an den Nässegrad angepasst werden kann.

Bei einem Wischersystem 100, welches in Abhängigkeit des Lastverlaufs 410 gesteuert ist, ergibt sich der Wischzyklenverlauf 420. Nachdem zum Zeitpunkt C durch die Wischermotorsteuerung 135 bestimmt wurde, dass die Sichtscheibe 110 trocken ist, wird die Frequenz der Wischzyklen von 40 Zyklen pro Minute (cpm) kontinuierlich abgesenkt. Mithilfe des oben insbesondere mit Bezug auf Fig. 3 beschriebenen Vorgehens ist es möglich, ein kontinuierliches Wischen bis zu einer unteren Grenze von ca. 20 Zyklen pro Minute aufrecht zu erhalten. Das bedeutet, dass das Wischersystem 100 auch bei sehr geringen Befeuchtungsgraden der Sichtscheibe 110 noch im kontinuierlichen Modus betrieben werden kann, anstatt in den Intervallmodus wechseln zu müssen. Herkömmliche Wischersysteme 100, die eine Absenkung der Wischergeschwindigkeit entsprechend des Verlaufs 220 in Fig. 2 durchführen, kommen bei vertretbarer Ratterneigung des Wischerblatts 115 auf der Sichtscheibe 110 üblicherweise nicht unter eine Zyklenzahl von 40 Zyklen pro Minute. Ein langsamer Dauerbetrieb entsprechend der dritten Position des Wahlschalters 140 in Fig. 1 entspricht in bekannten Systemen üblicherweise ca. 40 bis 45 cpm, ein schneller Dauerbetrieb entsprechend der vierten Position des Wahlschalters 140 in Fig. 1 ca. 60 bis 70 cpm.

Nach dem Befeuchten der Sichtscheibe 110 zum Zeitpunkt D steigt der Wischerzyklenverlauf 420 entsprechend schnell auf einen Wert von ca. 40 Zyklen pro Minute. Die dargestellten absoluten Zyklenzahlen sind beispielhaft und sollen nicht als Beschränkung aufgefasst werden.

Die Erfindung eignet sich zum Ansteuern eines Wischermotors vorzugsweise an Board eines Kraftfahrzeugs 105; ein Einsatz an anderer Fortbewegungsmitteln wie Schiffen oder Flugzeigen oder im stationären Betrieb ist ebenfalls möglich.

## Patentansprüche

1. Wischermotorsteuerung (135) zur Ansteuerung eines Wischermotors (130), der einen Wischerarm (120) in einer Pendelbewegung zwischen zwei Wendelagen (WL) bewegt, wobei die Wischermotorsteuerung (135) dazu ausgebildet ist, eine Geschwindigkeit des Wischerarms (120) in Abhängigkeit einer Stellung des Wischerarms (120) zu steuern, wobei die Geschwindigkeit des Wischerarms (120) in Wendebereichen (WB), die die Wendelagen (WL) umfassen, im Wesentlichen einer Sinusfunktion (210) folgt und zwischen den Wendebereichen (WB) geringer als das Maximum der Sinusfunktion (210) ist,
**dadurch gekennzeichnet, dass** die Geschwindigkeit des Wischerarms (120) zwischen den Wendebereichen (WB) einem vorgegebenen Verlauf (210, 310, 320) folgt, der abhängig von einer mechanischen Last (410) des Wischermotors (130) ist.

2. Wischermotorsteuerung (135) nach Anspruch 1, **dadurch gekennzeichnet, dass** der Wischermotor (130) mittels eines Kurbelgetriebes (125) mit dem Wischerarm (120) gekoppelt ist und die Wischermotorsteuerung (135) dazu eingerichtet ist, die Drehgeschwindigkeit des Wischermotors (130) konstant zu halten, während sich der Wischerarm (120) in einem der Wendebereiche (WB) befindet.

3. Wischermotorsteuerung (135) nach Anspruch 2, **dadurch gekennzeichnet, dass** die Drehgeschwindigkeit des Wischermotors (130) zwischen den Wendebereichen (WB) in einer niedrigeren Geschwindigkeit als in den Wendebereichen (WB) konstant gehalten wird.

4. Wischermotorsteuerung (135) nach Anspruch 1, wobei der Wischermotor (130) mittels eines kontinuierlichen Getriebes (160) mit dem Wischerarm (120) gekoppelt ist.

5. Wischermotorsteuerung nach einem der vorangehenden Ansprüche, ferner umfassend eine Einrichtung zur Bestimmung, dass eine Leistungsaufnahme des Wischermotors über einem vorbestimmten Schwellenwert liegt.

6. Wischermotorsteuerung (135) nach einem der vorangehenden Ansprüche, ferner umfassend eine Einrichtung (135) zur Bestimmung, dass eine Zeit, die verstreicht, bis der Wischerarm (120) von einer Wendelage (WL) zur anderen Wendelage (WL) bewegt ist, über einem vorbestimmten Schwellenwert liegt.

7. Wischermotorsteuerung (135) nach einem der vorangehenden Ansprüche, ferner umfassend eine Einrichtung (150) zur Bestimmung, dass eine Windgeschwindigkeit im Bereich des Wischerarms (120) oberhalb eines vorbestimmten Wertes liegt.

8. Verfahren zum Steuern eines Wischermotors (130), der einen Wischerarm (120) in einer Pendelbewegung zwischen zwei Wendelagen (WL) bewegt, wobei das Verfahren folgende Schritte umfasst:
- Bestimmen, dass sich der Wischerarm (120) in einem von zwei Wendebereichen (WB), die um die Wendelagen (WL) liegen, befindet; und
- Ansteuern des Wischermotors (130) derart, dass eine Geschwindigkeit des Wischerarms (120) im Wendebereich (WB) im Wesentlichen einer Sinusfunktion (210) folgt und zwischen den Wendebereichen (WB) geringer als das Maximum der Sinusfunktion (210) ist, wobei die Geschwindigkeit des Wischerarms (120) zwischen den Wendebereichen (WB) einem vorgegebenen Verlauf (210, 310, 320) folgt, der abhängig von einer mechanischen Last (410) des Wischermotors (130) ist.

9. Computerprogrammprodukt mit Programmcodemitteln zur Durchführung des Verfahrens nach Anspruch 8, wenn das Computerprogrammprodukt auf einem computerlesbaren Datenträger gespeichert ist oder auf einer Verarbeitungseinrichtung (135) abläuft.

## Claims

1. Wiper motor controller (135) for driving a wiper motor (130) which moves a wiper arm (120) in an oscillating movement between two turning positions (WL), wherein the wiper motor controller (135) is designed to control a speed of the wiper arm (120) depending on a position of the wiper arm (120), wherein the speed of the wiper arm (120) in turning regions (WB), which include the turning positions (WL), substantially follows a sinusoidal function (210) and is lower than the maximum for the sinusoidal function (210) between the turning regions (WB), **characterized in that** the speed of the wiper arm (120) between the turning regions (WB) follows a prespecified profile (210, 310, 320) which is dependent on a mechanical load (410) of the wiper motor (130).

2. Wiper motor controller (135) according to Claim 1, **characterized in that** the wiper motor (130) is coupled to the wiper arm (120) by means of a crank mechanism (125) and the wiper motor controller (135) is designed to keep the rotation speed of the wiper motor (130) constant while the wiper arm (120) is in one of the turning regions (WB).

3. Wiper motor controller (135) according to Claim 2, **characterized in that** the rotation speed of the wiper motor (130) between the turning regions (WB) is kept constant at a lower speed than in the turning regions (WB).

4. Wiper motor controller (135) according to Claim 1, wherein the wiper motor (130) is coupled to the wiper arm (120) by means of a continuous gear mechanism (160).

5. Wiper motor controller according to one of the preceding claims, further comprising a device for determining that a power consumption by the wiper motor lies above a predetermined threshold value.

6. Wiper motor controller (135) according to one of the preceding claims, further comprising a device (135) for determining that a time which passes until the wiper arm (120) is moved from one turning position (WL) to the other turning position (WL) lies above a predetermined threshold value.

7. Wiper motor controller (135) according to one of the preceding claims, further comprising a device (150) for determining that a wind speed in the region of the wiper arm (120) lies above a predetermined value.

8. Method for controlling a wiper motor (130) which moves a wiper arm (120) in an oscillating movement between two turning positions (WL), wherein the method comprises the following steps:
- determining that the wiper arm (120) is in one of two turning regions (WB) which lie around the turning positions (WL); and
- driving the wiper motor (130) in such a way that a speed of the wiper arm (120) in the turning region (WB) substantially follows a sinusoidal function (210) and is lower than the maximum for the sinusoidal function (210) between the turning regions (WB), wherein the speed of the wiper arm (120) between the turning regions (WB) follows a prespecified profile (210, 310, 320) which is dependent on a mechanical load (410) of the wiper motor (130).

9. Computer program product comprising program code means for carrying out the method according to Claim 8 when the computer program product is stored on a computer-readable data storage medium or is running on a processing device (135).

## Revendications

1. Commande de moteur d'essuyage (135) destinée à commander un moteur d'essuie-glace (130) d'un bras d'essuie-glace (120) suivant un mouvement pendulaire entre deux positions d'inversion (WL), dans lequel la commande de moteur d'essuie-glace (135) est conçue pour commander la vitesse du bras d'essuie-glace (120) en fonction d'une position du bras d'essuie-glace (120), dans lequel la vitesse du bras d'essuie-glace (120) dans les zones d'extrémité (WB), qui comprennent les positions d'inversion (WL), suit sensiblement une fonction sinusoïdale (210), et entre les zones d'inversion (WB) est inférieure au maximum de la fonction sinusoïdale (210),
**caractérisé en ce que** la vitesse du bras d'essuie-glace (120) entre les zones d'inversion (WB) suit un profil prédéterminé (210, 310, 320) qui dépend d'une charge mécanique (410) du moteur d'essuie-glace (130).

2. Commande de moteur d'essuie-glace (135) selon la revendication 1, **caractérisée en ce que** le moteur d'essuie-glace (130) au est couplé moyen d'un mécanisme à manivelle (125) au bras d'essuie-glace (120) et **en ce que** la commande de moteur d'essuie-glace (135) est conçue pour maintenir constante la vitesse de rotation du moteur d'essuie-glace (130), pendant que le bras d'essuie-glace (120) se trouve dans l'une des zones d'inversion (WB).

3. Commande de moteur d'essuie-glace (135) selon la revendication 2, **caractérisée en ce que** la vitesse de rotation du moteur d'essuie-glace (130) entre les zones d'inversion (WB) est maintenue constante à une vitesse plus faible que dans les zones d'inversion (WB).

4. Commande de moteur d'essuie-glace (135) selon la revendication 1, dans laquelle le moteur d'essuie-glace (130) est couplé au bras d'essuie-glace (120) au moyen d'une transmission continue (160).

5. Commande de moteur d'essuie-glace selon l'une quelconque des revendications précédentes, comprenant en outre un dispositif pour déterminer qu'une consommation d'énergie du moteur d'essuie-glace est supérieure à une valeur de seuil prédéterminée.

6. Commande de moteur d'essuie-glace (135) selon l'une quelconque des revendications précédentes, comprenant en outre un dispositif (135) destiné à déterminer qu'un temps s'écoulant jusqu'à ce que le bras d'essuie-glace (120) soit déplacé d'une position d'inversion (WL) à une autre position d'inversion (WL) se situe au-dessus d'une valeur de seuil prédéterminée.

7. Commande de moteur d'essuie-glace (135) selon l'une quelconque des revendications précédentes, comprenant en outre un dispositif (150) destiné à déterminer que la vitesse du vent dans la région du bras d'essuie-glace (120) se situe au-dessus d'une valeur prédéterminée.

8. Procédé pour commander un moteur d'essuie-glace (130), qui déplace un bras d'essuie-glace (120) suivant un mouvement pendulaire entre deux positions d'inversion (WL), le procédé comprenant les étapes consistant à :
- déterminer que le bras d'essuie-glace (120) se trouve dans l'une de deux zones d'inversion (WB) qui se situent au voisinage des positions d'inversion (WL) ; et
- commander le moteur d'essuie-glace (130) de telle sorte que la vitesse du bras d'essuie-glace (120) suive sensiblement une fonction sinusoïdale (210) dans la zone d'inversion (WB) et soit inférieure au maximum de la fonction sinusoïdale (210) entre les zones d'inversion (WB), dans lequel la vitesse du bras d'essuie-glace (120) entre les zones d'inversion (WB) suit un profil prédéterminé (210, 310, 320) qui dépend d'une charge mécanique (410) du moteur d'essuie-glace (130).

9. Produit de programme d'ordinateur comportant des moyens de code de programme destinés à mettre en oeuvre le procédé selon la revendication 8, lorsque le produit de programme informatique est stocké sur un support lisible par ordinateur ou qui est exécuté sur un dispositif de traitement (135).
